# EUROPÄISCHE PATENTSCHRIFT

(11) **EP 0 888 935 B1**
(45) Veröffentlichungstag und Bekanntmachung des Hinweises auf die Patenterteilung: **12.09.2001**
(21) Anmeldenummer: 98112416.7
(22) Anmeldetag: 03.07.1998
(51) Int. Cl.: B60R 21/26, F42B 3/04

(54) **Pyrotechnischer Gasgenerator und Verfahren zu seiner Herstellung**
Pyrotechnic gas generator and method for producing the same
Générateur de gaz pyrotechnique et son procédé de fabrication

(30) Priorität: 03.07.1997 DE 19728438
(43) Veröffentlichungstag der Anmeldung: 07.01.1999
(73) Patentinhaber: TRW Airbag Systems GmbH & Co. KG, 84544 Aschau am Inn (DE)
(72) Erfinder: Winterhalder, Marc, 84518 Garching/Alz (DE); Adam, Paul, 93161 Viehausen (DE); Fink, Martin, 86556 Unterbernbach (DE); Leifheit, Markus, 85452 Moosinning (DE)
(74) Vertreter: Kitzhofer, Thomas, Dipl.-Ing.

(56) Entgegenhaltungen:
- US-A- 4 158 696
- US-A- 5 219 178
- US-A- 5 387 009

## Beschreibung

Die Erfindung betrifft einen Gasgenerator, insbesondere für ein Fahrzeuginsassen-Rückhaltesystem, nach dem Oberbegriff des Patentanspruchs 1.

Bekannte Rohrgasgeneratoren zum Aufblasen von Gassäcken in Fahrzeugen sind üblicherweise einstufig oder zweistufig ausgebildet. Der Herstellungsaufwand für ihre Fertigung ist relativ hoch, was darin begründet ist, daß bislang völlig unterschiedliche Konstruktionen für die ein- und zweistufigen Rohrgasgeneratoren vorgesehen sind. Rohrgasgeneratoren sind im übrigen hauptsächlich für Beifahrer-Rückhaltesysteme vorgesehen, da ihre Außengeometrie am besten für die Unterbringung im Armaturenbrett geeignet ist.

Einen sehr aufwendig aufgebauten Zweistufen-Rohrgasgenerator zeigt die US 5 033 390. Dabei sind an den axialen Enden des Generatorgehäuses Brennkammern vorgesehen, zwischen denen zwei Expansionsräume angeordnet sind. Diese beiden, voneinander getrennten Expansionsräume werden durch zwei äußere Scheiben sowie eine Zwischenscheibe gebildet, die einstückig an einem Anker angeformt ist, der an die äußeren Scheiben angrenzt. Zudem werden axial von außen langgestreckte Rohre eingeschraubt, die eine Verstärkerladung in ihrem Inneren aufweisen und mit axialen Deckeln, die das aus zwei Teilen bestehende rohrförmige Gehäuse stimseitig abdichten, verbunden sind. Darüber hinaus hat das rohrförmige Gehäuse im Inneren axiale Anschläge, die die Scheiben positionieren. Soll ein Gasgenerator mit größeren oder kleineren Brennkammern hergestellt werden, sind Gehäuseteile und Ankerteile neu zu dimensionieren. Somit können kaum gleiche Teile verwendet werden. Es ist auch leicht ersichtlich, daß dieser komplizierte Aufbau die Fertigung des Gasgenerators relativ teuer macht. Zudem sind die einzelnen Teile nicht dafür geeignet, auch für einstufige Gasgeneratoren verwendet werden zu können. Dieselben Nachteile hat auch der Gasgenerator nach der US 5 219 178, bei dem alle in das rohrförmige Gehäuse eingesetzten Teile axial aneinanderliegen und sich gegenseitig lagefixieren.

Aus der gattungsgemäßen US-A-5 387 009 ist ein Gasgenerator mit einem rohrförmigen Außengehäuse bekannt, in den ein Filtereinsatz mit einem Außengehäuse eingeschoben wird. Der Filtereinsatz ist dabei im wesentlichen axial genauso lang wie das rohrförmige Gehäuse, so daß nach dem Einschieben des Filtereinsatzes an beiden axialen Enden des Rohres nur noch Befestigungsscheiben axial angebracht werden müssen, die das Außengehäuse schließen und den Filtereinsatz axial sichern, nachdem sie an ihm anliegen. Innerhalb des Filtereinsatzes ist auch der pyrotechnische Treibsatz untergebracht. Eine mehrstufige Generatorausführung läßt diese Konstruktion nicht zu, vielmehr müßte der Gasgenerator völlig anders konzipiert werden.

Die Erfindung schafft einen Gasgenerator, dessen Konstruktionsprinzip ein einfaches, günstiges Herstellen sowohl einer ein- als auch einer zweistufigen oder mehrstufigen Version erlaubt. Das Grundprinzip der Erfindung führt zu einer Art Baukastenprinzip, bei dem zahlreiche Teile bei der ein- und mehrstufigen Version gleich sind. Zudem ermöglicht der erfindungsgemäße Gasgenerator ein einfaches Verändern der Gasgeneratorleistung, ohne daß hierfür eine grundlegend andere Konstruktion oder andere Dimensionierung der Einzelteile erforderlich ist. Dies wird durch einen Gasgenerator mit den Merkmalen des Anspruchs 1 gelöst.

Während beim Stand der Technik stets axiale Anschläge an den Gehäuseteilen und auf eine bestimmte Brennkammergröße abgestimmte Teile vorgesehen sind, schlägt die Erfindung vor, das Außengehäuse oder die Gehäuseteile des Filtereinsatzes unterschiedlich weit in das Generatorgehäuse einschieben zu können, ohne daß ein axialer Anschlag vor dem Befestigen des Außengehäuses und des Generatorgehäuses vorgesehen ist. Somit läßt sich der Filtereinsatz in beliebige Stellungen innerhalb des Generatorgehäuses bringen und anschließend an diesem befestigen. Soll ein einstufiger Gasgenerator hergestellt werden, so wird der Einsatz nur soweit in das als Rohr ausgebildete Generatorgehäuse eingesteckt, daß er sich an einem Ende des Gasgenerators befindet. Bei einem mehrstufigen Gasgenerator kann das nahezu gleiche Generatorgehäuse verwendet werden und, gegebenenfalls bis auf geringfügige Änderungen, auch der gleiche Einsatz, der dann nur tiefer in das Generatorgehäuse eingeschoben und daran befestigt wird. Je nachdem, ob der Filtereinsatz in der Mitte zwischen den Enden des Generatorgehäuses oder näher an einem Ende angeordnet ist, können gleich große oder unterschiedlich große Brennkammern, welche an den Filtereinsatz angrenzen, vorgesehen sein. Diese Änderung der Brennkammervolumina bedarf keiner Änderung der Geometrie der Teile. Im übrigen gilt dies auch für einen einstufigen erfindungsgemäßen Gasgenerator, bei dem zur Erzielung einer geringeren Leistung der Filtereinsatz nur tiefer in das ansonsten gleich dimensionierte Generatorgehäuse eingesteckt werden muß. Damit ergibt sich eine große Variabilität bezüglich der Brennkammervolumina und eine leichte Anpassbarkeit der Gasgeneratorleistung an die spezifischen Kundenvorgaben. Durch große Bauteilgleichheit und eine geringe Anzahl der Bauteile ergeben sich niedrige Stückkosten. Die Vormontierbarkeit des Einsatzes erleichtert den Zusammenbau und wirkt sich kostensenkend aus.

Soll hingegen bei dem bekannten Gasgenerator nach der US 5 033 390 z.B. eine oder sollen beide Brennkammern in ihrem Volumen geändert werden, so bedarf dies einer völligen Anpassung der beiden, zum Gasgeneratorgehäuse zusammensetzbaren Rohre und der zahlreichen im Inneren angeordneten, axialen Verbindungsteile.

Vorzugsweise bildet der gesamte Filtereinsatz eine vormontierte Einheit, die in das Generatorgehäuse eingeschoben wird. Aber es ist auch möglich, daß der Filtereinsatz erst im Generatorgehäuse zusammengebaut wird. Dies kann beispielsweise dadurch geschehen, daß das Außengehäuse zwei Stirnwände hat, die das Filter nur teilweise (an den Stirnseiten) umgeben und zwischen sich das Filter klemmen und die von entgegengesetzten axialen Öffnungen des rohrförmigen Gasgeneratorgehäuses aus eingeschoben werden. Um eine gewisse Fixierung des Filtereinsatzes oder dessen Gehäuseteile beim Einschieben zu erreichen, ist vorzugsweise eine Preßpassung zwischen Gasgeneratorgehäuse und Außengehäuse vorgesehen.

Der Einsatz hat bei der bevorzugten Ausführungsform auch wenigstens einen Expansionsraum in seinem Inneren.

Ist der erfindungsgemäße Gasgenerator als einstufiger Gasgenerator ausgebildet, ist, wie bereits erwähnt, der Einsatz an einem axialen Ende des Generatorgehäuses vorgesehen und dichtet das Generatorgehäuse nach außen auf dieser Seite ab.

Eine weitere Möglichkeit, die Anzahl der verwendeten Teile zu reduzieren, besteht darin, daß der Gasgenerator einen Einsatz mit einer sich axial durch ihn bis in die Brennkammer erstreckenden Zündeinheit aufweist. Die Einsätze mit und ohne Zündeinheit unterscheiden sich kaum voneinander. Abhängig von der gewünschten Einbaulage oder den Umgebungsverhältnissen wird z.B. auf der leichter zugänglichen Seite des Gasgenerators der Einsatz mit der Zündeinheit eingesteckt und auf der anderen Seite der Einsatz ohne Zündeinheit. Aufgrund dieses Baukastensystems lassen sich verschiedene Ausgestaltungen ohne konstruktiven oder fertigungstechnischen Mehraufwand erreichen. Ist der erfindungsgemäße Gasgenerator mehrstufig ausgebildet, so wird der Einsatz, wie bereits erwähnt, einfach so tief in das Generatorgehäuse gesteckt, daß er zwischen zwei Brennkammern angeordnet ist. Wird ein Einsatz verwendet, der an beiden Stirnseiten offen ist, kann der Einsatz als Filtereinsatz für beide Brennkammern dienen. Sind mehrere Filtereinsätze oder Expansionsräume erwünscht, so können beipielsweise zwei Einsätze nacheinander eingeschoben werden, von denen ein Einsatz mit einer Stirnwand ausgestattet ist, die zum anderen Einsatz hin geschlossen ist, wodurch die Brennkammern voneinander getrennt werden.

Die Erfindung schafft darüber hinaus ein Verfahren zum Herstellen eines erfindungsgemäßen Gasgenerators, welches ein Baukastenprinzip für ein- und mehrstufige Rohrgasgeneratoren unterschiedlicher Leistungen bereitstellt. Das erfindungsgemäße Verfahren sieht vor, daß von einer axialen Öffnung des Gasgeneratorgehäuses aus das Außengehäuse des Filters oder die Gehäuseteile in die gewünschte Tiefe vollstandig eingeschoben wird/werden, daß die Außengeometrie des Außengehäuses und die Innengeometrie des Generatorgehäuses so aufeinander abgestimmt sind, daß ein noch tieferes Einschieben möglich wäre, daß das Außengehäuse samt dessen Gehäuseteilen radial am Generatorgehäuse ohne Vorsehen eines axialen Anschlage befestigt wird, daß Treibstoff in die Brennkammer gefüllt wird und daß ein stirnwandiger Deckel am Generatorgehäuse angebracht wird, welcher die Brennkammer schließt.

Auch beim erfindungsgemäßen Verfahren ist vorgesehen, daß der Filtereinsatz eine separate, vormontierte Einheit bildet oder daß die Gehäuseteile des Außengehäuses eingeschoben und damit zusammengefügt werden. Dies kann beispielsweise dadurch geschehen, daß zwei Stirnwände vorgesehen sind und ein Filter, wobei die Stirnwände von gegenüberliegenden axialen Öffnungen des Generatorgehäuses aus eingeschoben werden und zwischen sich das Filter, oder allgemeiner gesagt, ein Mantelteil mit Ausströmöffnungen klemmen.

Weitere Merkmale und Vorteile der Erfindung ergeben sich aus der nachfolgenden Beschreibung und aus den nachfolgenden Zeichnungen, auf die Bezug genommen wird. In den Zeichnung zeigen:
Fig. 1 eine erste Ausführungsform des erfindungsgemäßen Gasgenerators, der einstufig ausgebildet und der durch das erfindungsgemäße Verfahren hergestellt ist, in Längsschnittansicht,
Fig. 2 eine zweite Ausführungsform des erfindungsgemäßen Gasgenerators, bei dem im Vergleich zu der in Fig. 1 dargestellten Ausführungsform auch die Zündeinheit Teil eines Einsatzes ist,
Fig. 3 eine dritte Ausführungsform des erfindungsgemäßen Gasgenerators, der zweistufig ausgebildet ist,
Fign. 4a und 4b verschiedene Ausführungsformen von Berstscheiben, die beim Einsatz, der in Fig. 3 gezeigt ist, verwendbar sind,
Fig. 5 eine vierte Ausführungsform des erfindungsgemäßen Gasgenerators, der zweistufig ausgebildet ist,
Fig. 6 eine fünfte Ausführungsform des erfindungsgemäßen Gasgenerators, der einstufig ausgebildet ist und bei dem das Innere des Einsatzes mit Treibstoff gefüllt ist,
Fig. 7 eine sechste Ausführungsform des erfindungsgemäßen Gasgenerators, der zweistufig ausgebildet ist und zwei, mit Treibstoff gefüllte Einsätze aufweist, und
Fig. 8 eine siebte Ausführungsform des erfindungsgemäßen Gasgenerators, der zweistufig ausgebildet ist und auf jeder Seite einen Zwischenfilter hat.

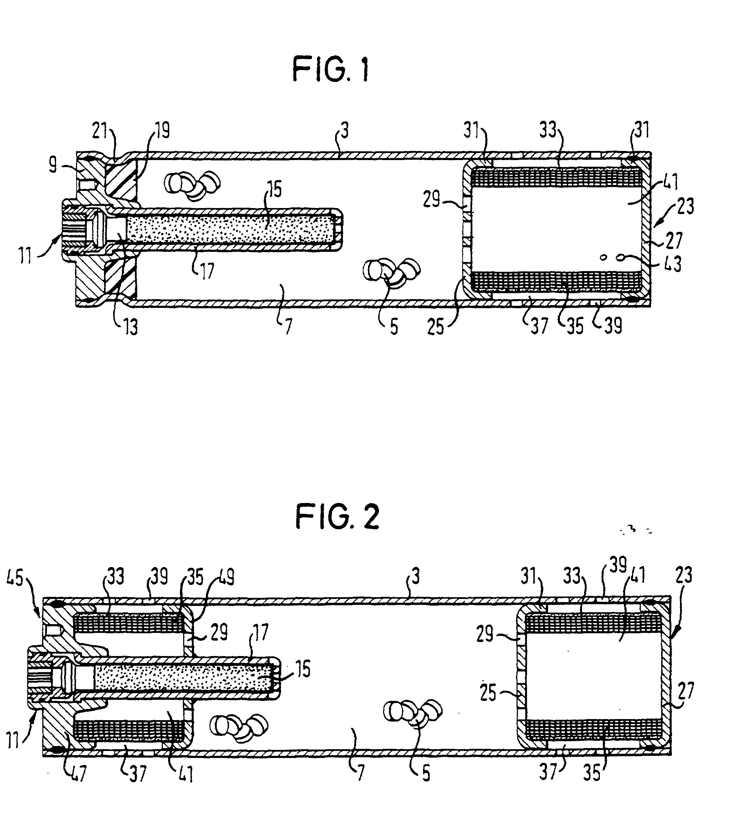

In Fig. 1 ist ein Rohrgasgenerator zum Aufblasen eines Beifahrergassacks (nicht gezeigt) dargestellt. Der Gasgenerator hat ein rohrförmiges Generatorgehäuse 3 mit einer mit Treibstoff 5 gefüllten Brennkammer 7 in seinem Inneren. Stirnseitig ist das Gasgeneratorgehäuse 3 durch zwei Deckel gasdicht verschlossen. Der in Fig. 1 linke Deckel 9 weist eine in die Brennkammer 7 ragende, langgestreckte Zündeinheit 11 auf, die am Deckel 9 befestigt ist. Die Zündeinheit 11 umfaßt einen Zünder 13 und eine sich daran anschließende Verstärkerladung 15. Die Verstärkerladung 15 ist in einem langgestreckten Rohr 17 angeordnet. Der Deckel 9 wird durch Schweißen am Gehäuse 3 befestigt. Eine elastische Scheibe 19 zur Vorspannung des Treibstoffs 5 ist durch eine umlaufende Einprägung 21 im Generatorgehäuse 3 positioniert. Durch eine zusätzliche derartige Einprägung kann z.B. auch der Filtereinsatz 23 in einer Richtung positioniert werden. An dem dem Deckel gegenüberliegenden, axialen Ende des Generatorgehäuses ist ein als vormontierte Einheit ausgebildeter Filtereinsatz 23 in das Generatorgehäuse 3 eingeschoben.

Der Filtereinsatz 23 hat ein Außengehäuse mit zwei gegenüberliegenden, topfartig geformten Stirnwänden 25, 27. Die innenliegende Stirnwand 25 begrenzt die Brennkammer 7 auf deren rechtem, stirnseitigen Ende. Durchtrittsöffnungen 29 in der Stirnwand 25 erlauben, wie im folgenden noch näher erläutert wird, einen Durchtritt von erzeugtem Gas. Einander zugewandte, ringförmige Mantelabschnitte 31 der Stirnwände liegen dichtend an der Innenseite des Generatorgehäuses 3 an. Ein Stützring 33, der gasdurchlässig ist und aus einem gelochten Blech oder einem Drahtgitter besteht, ist mit seinen radialen Enden in die Stirnwände 25, 27 gesteckt und liegt innenseitig an den Mantelabschnitten 31 mit einer Preßpassung an, so daß er die Stirnwände 25, 27 miteinander verbindet. Ein rohrförmiger Filter 35 liegt wiederum innenseitig am Stützring 33 an.

Zwischen dem Stützring 33 und dem Generatorgehäuse 3 ergibt sich ein ringförmiger, erster Expansionsraum 37. Mehrere am Umfang verteilte Austrittsöffnungen 39 leiten im Rückhaltefall Druckgas in den Gassack.

Die Stirnwand 27 weist keine Austrittsöffnungen auf, sondern schließt das Innere des Gasgenerators am rechten, axialen Ende. Nicht gezeigt sind Verdämmungen, die die Durchtrittsöffnungen 29 und/oder die Austrittsöffnungen 39 gegen Feuchtigkeitseintritt verschließen.

Das Innere des Filtereinsatzes 23 ist hohl, so daß ein zweiter Expansionsraum 41 gebildet ist.

Der Filtereinsatz 23 läßt sich aufgrund seiner Außengeometrie, die exakt auf die Innengeometrie des Generatorgehäuses 3 abgestimmt ist, beliebig tief in das Generatorgehäuse 3 einschieben, ohne daß dafür anders dimensionierte Teile notwendig wären, da keine axialen Anschläge zur Positionierung des Filtereinsatzes vorgesehen sind. Durch mehr oder weniger tiefes Einschieben des Filtereinsatzes läßt sich das Brennkammervolumen auf einfache Weise variieren und die Leistung des Gasgenerators auf die Vorgaben des Fahrzeugherstellers abstimmen. Nach dem Einschieben und Positionieren werden Außengehäuse und Generatorgehäuse von außen aneinander befestigt (z.B. durch Verstemmen und/oder Verschweißen), Brennstoff wird eingefüllt, und der stirnwandige Deckel 9 wird am Generatorgehäuse 3 angebracht, welcher die Brennkammer 7 schließt. Trotz unterschiedlicher Brennkammervolumina lassen sich sehr einfach entsprechende Gasgeneratoren in derselben Fertigungslinie herstellen.

Bei einem Unfall wird der Zünder 13 über eine nicht gezeigte Sensorik aktiviert. Über die Verstärkerladung 15 wird der Treibstoff 5 gezündet, so daß heißes Gas entsteht, das mit Partikeln und kondensationsfähigen Bestandteilen durchmischt ist. Das heiße Gas strömt nach dem Öffnen der Verdämmung über die Durchtrittsöffnungen 29 in den zweiten Expansionsraum 41, wobei die Stirnwand 25 bereits als eine Art Vorfilter wirkt. Im zweiten Expansionsraum 41 findet eine Abkühlung des Gases statt. Ein Teil der kondensationsfähigen Bestandteile des Gases fällt aus und wird im Filter 35 ebenso wie die Partikel gefangen. Im Expansionsraum 41 erfolgt eine Beruhigung des Gasstromes und eine gleichmäßige Verteilung des Gases. Der erste Expansionsraum 37 stellt sicher, daß der Filter 35 auf nahezu seiner gesamten Fläche in radialer Richtung durchströmt wird und keine axialen Strömungen im Filter vorhanden sind. Das gekühlte und gefilterte Gas entspannt sich im Expansionsraum 37 nochmals und gelangt über die Austrittsöffnungen 39 in den Gassack.

In den Expansionsräumen 37, 41 kann, um eine Nachreaktion von Gasbestandteilen und eine chemische Umwandlung einiger Gasbestandteile zu erreichen, ein katalytisch wirkendes Material 43 eingesetzt werden, mittels dem eine Reduktion der Schadgase erfolgt, die Teil des erzeugten Gases, genauer gesagt des erzeugten Gasgemisches sind. Dieses sorgt für eine Reduktion der beim Abbrand des Treibstoffs 5 erzeugten Gase.

Die in Fig. 2 dargestellte Ausführungsform unterscheidet sich von der in Fig. 1 dargestellten durch das Vorsehen von zwei Filtereinsätzen anstatt einem. Der am rechten Ende vorgesehene Filtereinsatz 23 entspricht dem in Fig. 1 gezeigten Filtereinsatz 23, so daß hierauf nicht näher eingegangen werden muß. Der linke Filtereinsatz 45 ist konstruktiv ähnlich dem Filtereinsatz 23 aufgebaut, wobei einander entsprechende Teile gleiche Bezugszahlen tragen. In den Filtereinsatz 45 ist jedoch die Zündeinheit 11, die wie die in Fig. 1 gezeigte Zündeinheit 11 aufgebaut ist, integriert. Zu ihrer Arretierung ist die äußere Stirnwand 47 dicker ausgebildet als die Stirnwand 27. Die innere Stirnwand 49 entspricht der Stirnwand 25, wobei jedoch das Rohr 17 der Zündeinheit durch eine zentrische Öffnung durch sie hindurch in die Brennkammer 7 ragt. Auch der Filtereinsatz 45 kann beliebig tief in das Generatorgehäuse 3 eingeschoben werden. Austrittsöffnungen 39 am linken Ende des Generatorgehäuses 3 sind strömungsmäßig mit den beiden Expansionsräumen 37, 41, die durch den Filtereinsatz 45 definiert sind, verbunden.

Bei Aktivierung des in Fig. 2 gezeigten Gasgenerators strömt das erzeugte Gas sowohl in den linken, als auch in den rechten Filtereinsatz 45 bzw. 23 und über die Expansionsräume 41, die Filter 35, die Expansionsräume 37 und die Austrittsöffnungen 39 in den Gassack. Durch die beidseitige, symmetrische Anordnung der Austrittsöffnungen 39 an beiden Enden des Gasgenerators wird der Gassack gleichmäßig druckbeaufschlagt, so daß ein bei unsymmetrisch abströmenden Gasgeneratoren zu beobachtendes Schaukeln des Gassacks während des Aufblasvorgangs vermieden wird.

Zur Verbesserung der Filterwirkung können die Expansionsräume 37 und/oder 41 sogar ganz mit Filtermaterial ausgefüllt sein.

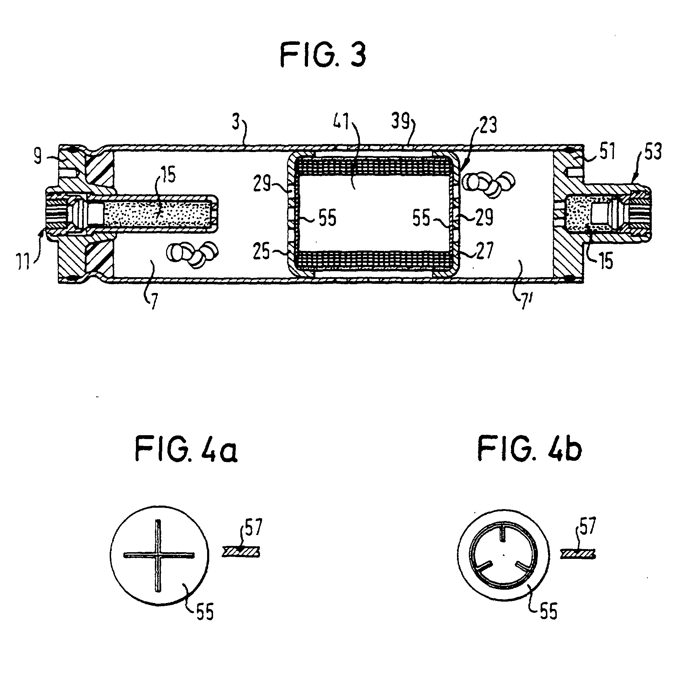

Der in Fig. 3 gezeigte Gasgenerator ist zweistufig ausgebildet. Zur Bildung von zwei Brennkammern 7, 7' wird ein für beide Brennkammern gemeinsamer Filtereinsatz 23 annähernd bis in die Mitte des Generatorgehäuses 3 geschoben. Der Filtereinsatz 23 unterscheidet von dem in Fig. 1 gezeigten Einsatz nur dadurch, daß auch die rechte Stirnwand 27 mit Durchtrittsöffnungen 29 versehen ist, also identisch zur Stirnwand 25 aufgebaut ist. Durch unterschiedlich tiefes Einschieben des Filtereinsatzes 23 in das Generatorgehäuse 3 kann das Verhältnis der Brennkammervolumina variiert werden, ohne daß hierfür anders dimensionierte Teile notwendig sind. Am linken Ende des Gasgenerators ist ein Deckel 9 mit einer Zündeinheit 11 vorgesehen, wobei deren Aufbau dem in Fig. 1 gezeigten Deckel 9 mit integrierter Zündeinheit entspricht. Am rechten, stirnseitigen Ende ist der Gasgenerator durch einen Deckel 51 mit integrierter Zündeinheit 53 verschlossen, wobei die Verstärkerladung 15 den Zünder 13 umgibt, und nicht aus dem Deckel 51 herausragt, aber über Öffnungen in der Deckelinnenwand mit der Brennkammer 7 in Strömungsverbindung steht.

Falls nur eine Stufe gezündet werden soll, muß ein sogenanntes Überzünden verhindert werden, d.h. die in einer Brennkammer erzeugten heißen Gase dürfen nicht in die andere Brennkammer strömen. Hierzu sind an der Innenseite der Stirnwände 25, 27 anliegende, die Durchtrittsöffnungen 29 verschließende, nur in einer Richtung zu öffnende Berstscheiben 55, vorzugsweise durch Schweißen befestigt. Die Berstscheiben 55 dienen gleichzeitig als Verdämmung.

In den Fign. 4a und 4b sind Ausführungsformen der Berstscheiben 55 dargestellt. Im Querschnitt V-förmige Einprägungen 57 können z.B. in einer Kreuzform oder einer Kreisform mit radialen Abschnitten verlaufen, und sie erleichtern das Öffnen der Berstscheibe 55. Die linke Berstscheibe 55 wird nur bei Gaserzeugung in der Brennkammer 7 und die rechte Berstscheibe 55 nur bei Gaserzeugung in der Brennkammer 7' geöffnet. Nach dem Öffnen beispielsweise der linken Berstscheibe 55 gelangt das Gas in den Expansionsraum 41. Der Druckanstieg im Expansionsraum 41 führt dazu, daß die rechte Berstscheibe 55 an die Stirnwand 27 angepreßt wird und sich nicht von ihr lösen oder zerstört werden kann.

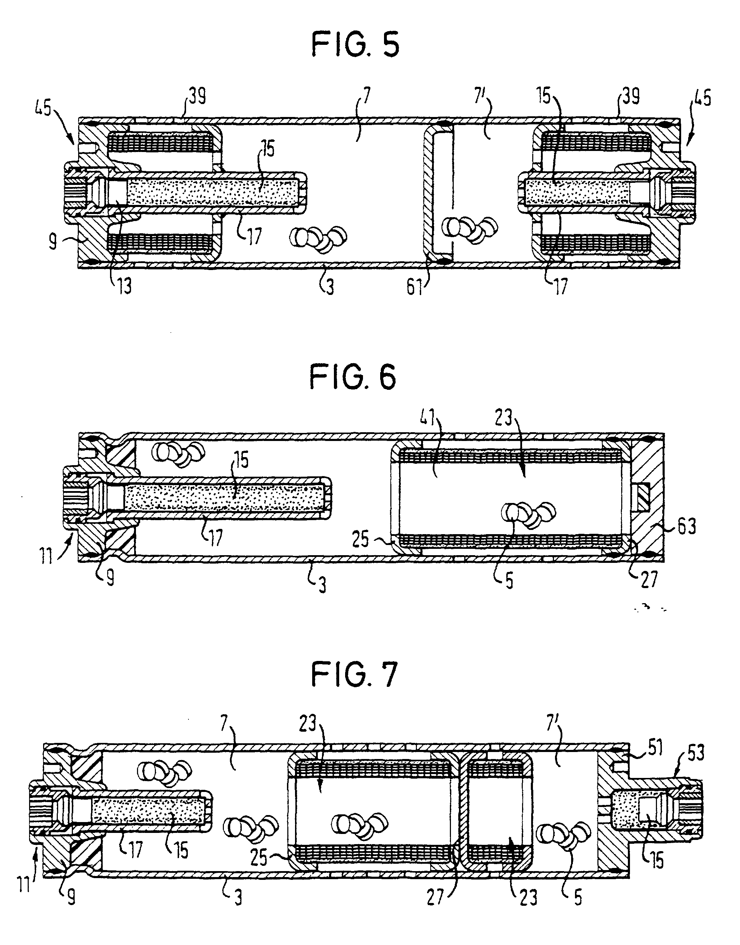

Der in Fig. 5 gezeigte zweistufige Gasgenerator weist an seinen beiden axialen Enden jeweils einen Filtereinsatz 45 mit integrierter Zündeinheit auf, wie er in Fig. 2 gezeigt ist. Der linke und der rechte Filtereinsatz 45 unterscheiden sich nur durch die Dimensionierung der Verstärkerladungen 15, die auf das Volumen der zugeordneten Brennkammern 7, 7' abgestimmt sind. Im Gegensatz zu der in Fig. 3 gezeigten Ausführungsform, sind die beiden Brennkammern 7, 7' nicht durch einen Filtereinsatz, sondern durch eine Trennwand 61 voneinander beabstandet, wobei die Trennwand 61 der in Fig. 1 gezeigten Stirnwand 27 entspricht. Die Austrittsöffnungen 39 sind im Bereich der axialen Enden des Generatorgehäuses 3 angeordnet und nicht, wie bei der in Fig. 3 gezeigten Ausführungsform etwa in der Mitte des Generatorgehäuses. Die Trennwand 61 kann zur Änderung des Verhältnisses der Brennkammervolumina unterschiedlich tief in das Generatorgehäuse 3 eingeschoben werden, ähnlich wie dies beim Einsatz 23 nach Fig. 3 der Fall ist. Die Trennwand 61 wird durch Schweißen mit dem Generatorgehäuse 3 verbunden. Damit unabhängig davon, ob ein einstufiger oder ein zweistufiger Gasgenerator mit einem oder mehreren Filtereinsätzen zu fertigen ist, stets das gleiche Generatorgehäuse 3 verwendet werden kann, werden die Austrittsöffnungen 39 erst nach Einschieben der Filtereinsätze oder Deckel hergestellt.

Der in Fig. 6 gezeigte Gasgenerator unterscheidet sich von den zuvor gezeigten dadurch, daß ein überlanger Filtereinsatz 23 vorgesehen ist, dessen Stirnwände 25, 27 eine zentrale, große Durchgangsöffnung haben. Der Expansionsraum 41 ist mit Treibstoff 5 gefüllt und dadurch nicht mehr als Expansionsraum wirksam. Durch diese Ausgestaltung läßt sich die Leistung des Gasgenerators im Verhältnis zu seinem Bauraum steigern. Am linken Ende ist der Gasgenerator durch einen Deckel 9 mit Zündeinheit 11, wie er zuvor bereits erläutert wurde, geschlossen, und am rechten Ende ist ein separater Deckel 63 vorgesehen. Der Deckel 63 schließt unmittelbar an den Filtereinsatz 23 an, ist in das Generatorgehäuse 3 eingeschoben und mit ihm verschweißt.

Anstatt einem Filtereinsatz 23, können auch zwei Filtereinsätze 23 vorgesehen sein, wie dies in Fig. 7 anhand eines zweistufigen Gasgenerators gezeigt ist. Der linke Filtereinsatz 23 entspricht dabei dem in Fig. 6 gezeigten. Der rechte, axial kürzere Filtereinsatz 23 weist eine geschlossene, an den linken Filtereinsatz 23 angrenzende Stirnwand 27, die die beiden Brennkammern 7, 7' voneinander trennt, auf.

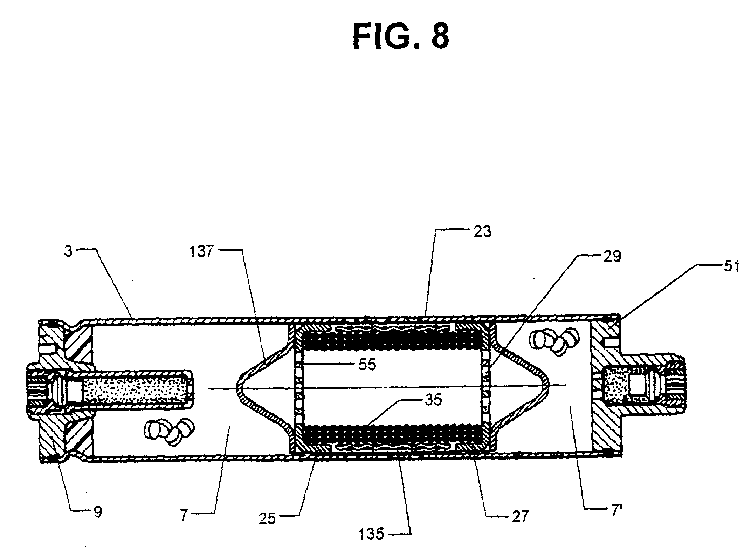

Die in Fig. 8 gezeigte Ausführungsform entspricht der in Fig. 3 gezeigten weitgehend. Lediglich der Filtereinsatz 23 ist anders ausgebildet. Der Filtereinsatz besteht aus den topfförmigen Stirnwänden 27 und 25 und stellt keine vormontierte Einheit dar. Vielmehr werden die Gehäuseteile nacheinander in das Gasgeneratorgehäuse 3 eingeschoben und werden dadurch zusammengefügt. Der Filtereinsatz 23 hat ferner keinen Stützring 33. Der Filter 35 ist zwischen den Stirnwänden 25, 27 axial geklemmt. Radial außerhalb des Filters 35 ist noch ein weiterer Filter 135 vorgesehen. Von jeder Stirnwand 25, 27 aus erstreckt sich ein kegelförmiger Zwischenfilter 137 in die Brennkammern 7, 7' und teilt diese in zwei Abschnitte. Die Zwischenfilter 137 sollen ein Verstopfen des Filters 35 durch Schlacketeilchen, die beim Zünden des Treibstoffs entstehen, verhindern.

Der Filtereinsatz 23 wird folgendermaßen zusammengebaut. Von der rechten axialen Öffnung des Generatorgehäuses 3 aus wird die Stirnwand 27 bis in die gewünschte Tiefe zusammen mit dem Zwischenfilter 137 eingeschoben, wobei eine Preßpassung zwischen der Stirnwand 27 und dem Generatorgehäuse 3 vorgesehen ist, die der leichteren Positionierung der Stirnwand dient. Anschließend wird von der linken axialen Öffnung aus die linke Stirnwand 25 samt den Filtern 35, 135 und dem Zwischenfilter 137 aus eingeführt. Anschließend werden die Stirnwände von außen durch Aufbringen einer radialen Kraft auf das Generatorgehäuse 3 mit diesem verstemmt. Auch ein Verschweißen von Stirnwänden 25, 27 mit dem Gasgeneratorgehäuse von außen oder von innen über die axialen Öffnungen im Generatorgehäuse, z.B. mittels Laserstrahl, ist möglich.

Durch die Verschiebbarkeit der Filtereinsätze läßt sich das Brennkammervolumen oder, bei zweistufigen Gasgeneratoren auch das Volumenverhältnis beliebig und sehr leicht einstellen. Ferner ergibt sich eine Art Baukastensystem, das durch zahlreiche gleiche Teile gekennzeichnet ist. Durch dieses Baukastensystem ist es möglich, ein- oder zweistufige Gasgeneratoren mit unterschiedlichen Leistungen in einer Fertigungslinie herzustellen.

## Patentansprüche

1. Gasgenerator, insbesondere für ein Fahrzeuginsassen-Rückhaltesystem, mit einem rohrförmigen Generatorgehäuse (3), das an seinen Stirnseiten geschlossen ist, das radiale Austrittsöffnungen (39), über die Gas den Gasgenerator verlassen kann, hat, und das in seinem Inneren wenigstens eine mit Treibstoff (5) gefüllte Brennkammer (7, 7'), wenigstens eine Zündeinheit (11) zum Zünden des Treibstoffs (5) in der Brennkammer (7, 7') sowie wenigstens einen Filter (35) stromaufwärts der Austrittsöffnungen (39) aufweist, wobei ein Filtereinsatz (23; 45) mit einem Außengehäuse vorgesehen ist und das Außengehäuse mehrere Gehäuseteile hat, die das im Filtereinsatz angeordnete Filter (35) wenigstens teilweise umgeben, **dadurch gekennzeichnet, daß** das Außengehäuse samt dessen Gehäuseteile ohne Vorsehen eines axialen Anschlags radial am Generatorgehäuse befestigt ist und daß die Außengeometrie des Außengehäuses und die Innengeometrie des Generatorgehäuses im noch nicht befestigten Zustand des Außengehäuses ein unterschiedlich weites vollständiges Einschieben des Außengehäuses oder seiner Gehäuseteile in axialer Richtung in das Generatorgehäuse erlauben.

2. Gasgenerator nach Anspruch 1, **dadurch gekennzeichnet, daß** der Filtereinsatz eine vormontierte Einheit bildet.

3. Gasgenerator nach einem der vorstehenden Ansprüche, **dadurch gekennzeichnet, daß** das Innere des Filtereinsatzes (23; 45) einen Expansionsraum (41) hat, in den erzeugtes Gas einströmt, um von ihm aus weiter in den Filter (35) zu strömen.

4. Gasgenerator nach einem der Ansprüche 1 bis 3, **dadurch gekennzeichnet, daß** der Filtereinsatz (23) mit Treibstoff (5) gefüllt ist.

5. Gasgenerator nach einem der vorstehenden Ansprüche, **dadurch gekennzeichnet, daß** radial zwischen dem im Querschnitt kreisringförmigen Filter (35) und dem Generatorgehäuse (3) ein weiterer Expansionsraum (37) vorgesehen ist.

6. Gasgenerator nach Anspruch 1, **dadurch gekennzeichnet, daß** das Außengehäuse aus zwei Stirnwänden (25, 27) besteht, die zwischen sich das Filter klemmen.

7. Gasgenerator nach einem der Ansprüche 1 bis 5, **dadurch gekennzeichnet, daß** das Außengehäuse aus zwei Stirnwänden (25, 27) und einem diese verbindenden gasdurchlässigen Stützring (33) besteht.

8. Gasgenerator nach Anspruch 6 oder 7, **dadurch gekennzeichnet, daß** die Stirnwände (25, 27) topfartig geformt sind, wenigstens eine Stirnwand die Brennkammer (7, 7') begrenzt und mit wenigstens einer Durchtrittsöffnung (29) für in der Brennkammer (7, 7') erzeugtes Gas versehen ist, wobei die topfartigen Stirnwände (25, 27) einander zugewandte, ringförmige Mantelabschnitte (31) haben.

9. Gasgenerator nach einem der Ansprüche 6 bis 8, **dadurch gekennzeichnet, daß** wenigstens eine Stirnwand (25, 27) wenigstens eine Durchtrittsöffnung (29) für in der Brennkammer (7, 7') erzeugtes Gas hat und sich von dieser Stirnwand (25, 27) aus ein Zwischenfilter in die Brennkammer (7, 7') erstreckt, welcher die Brennkammer (7, 7') in zwei Abschnitte teilt.

10. Gasgenerator nach Anspruch 8 oder 9, **dadurch gekennzeichnet, daß** die Durchtrittsöffnung (29) durch eine Berstscheibe (55) gegen Feuchtigkeitseintritt in die Brennkammer (7, 7') verschlossen ist.

11. Gasgenerator nach einem der vorstehenden Ansprüche, **dadurch gekennzeichnet, daß** der Filtereinsatz (23; 45) an einem axialen Ende des Generatorgehäuses (3) vorgesehen ist und daß dessen nach außen weisende Stirnwand (27) geschlossen ist und das Innere des Generatorgehäuses (3) an diesem Ende nach außen abdichtet.

12. Gasgenerator nach Anspruch 11, **dadurch gekennzeichnet, daß** der an einem axialen Ende vorgesehene Filtereinsatz (45) die sich axial durch ihn hindurch bis in die Brennkammer (7, 7') erstreckende Zündeinheit (11) aufweist.

13. Gasgenerator nach Anspruch 12, **dadurch gekennzeichnet, daß** der Gasgenerator an einem axialen Ende einen ersten Filtereinsatz (45) mit Zündeinheit (11) und am anderen Ende einen zweiten Filtereinsatz (23) ohne Zündeinheit (11) aufweist.

14. Gasgenerator nach Anspruch 13, **dadurch gekennzeichnet, daß** die Filtereinsätze (23; 45) eine Brennkammer (7, 7') zwischen sich begrenzen.

15. Gasgenerator nach einem der Ansprüche 1 bis 12, **dadurch gekennzeichnet, daß** der Gasgenerator mehrstufig ausgebildet ist.

16. Gasgenerator nach Anspruch 15, **dadurch gekennzeichnet, daß** mehrere Brennkammern (7, 7') durch wenigstens einen Einsatz (23) ohne Zündeinheit (11) voneinander getrennt sind.

17. Gasgenerator nach Anspruch 16, **dadurch gekennzeichnet, daß** zwei Brennkammern (7, 7') einen zwischen sich vorgesehenen, gemeinsamen Filtereinsatz (23) haben, in den in den Brennkammern (7, 7') erzeugtes Gas eingeblasen wird.

18. Gasgenerator nach Anspruch 16, **dadurch gekennzeichnet, daß** zwei aneinandergrenzende Einsätze (23) zwischen zwei Brennkammern (7, 7') vorgesehen sind, von denen wenigstens ein Einsatz (23) eine an den anderen Einsatz (23) angrenzende, geschlossene Stirnwand (27) aufweist.

19. Gasgenerator nach Anspruch 15, **dadurch gekennzeichnet, daß** zwischen den Brennkammern (7, 7') eine Trennwand (61) angeordnet ist, die topfförmig ausgebildet ist.

20. Gasgenerator nach Anspruch 19, **dadurch gekennzeichnet, daß** die Trennwand (61) ein am Generatorgehäuse (3) befestigtes, separates, in Axialrichtung vor ihrer Befestigung verschiebbares Teil ist.

21. Gasgenerator nach einem der vorstehenden Ansprüche, **dadurch gekennzeichnet, daß** im Filtereinsatz (23; 45) ein katalytisch wirkendes Material (43) zur Reduktion der Schadgase vorhanden ist, die ein Teil der beim Abbrand des Treibstoffs (5) erzeugten Gase sind.

22. Verfahren zum Herstellen eines Gasgenerators nach einem der vorstehenden Ansprüche mit folgenden Schritten:
von einer axialen Öffnung des Generatorgehäuses aus wird das Außengehäuse des Filters oder werden dessen Gehäuseteile in die gewünschte Tiefe vollständig eingeschoben, wobei die Außengeometrie des Außengehäuses und die Innengeometrie des Generatorgehäuses so aufeinander abgestimmt sind, daß ein noch tieferes Einschieben möglich wäre,
das Außengehäuse samt dessen Gehäuseteilen werden radial am Generatorgehäuse ohne Vorsehen eines axialen Anschlags befestigt,
Treibstoff wird in die Brennkammer eingefüllt und
ein stirnwandiger Deckel wird am Generatorgehäuse angebracht, welcher die Brennkammer schließt.

23. Verfahren nach Anspruch 22, **dadurch gekennzeichnet, daß** der gesamte vormontierte Filtereinsatz in das Generatorgehäuse eingeschoben wird.

24. Verfahren nach Anspruch 22, **dadurch gekennzeichnet, daß** das Außengehäuse des Filters zwei Stirnwände (25, 27) und einen Filter (33) aufweist, wobei die Stirnwände (25, 27) von gegenüberliegenden axialen Öffnungen des Generatorgehäuses aus eingeschoben werden und zwischen sich das Filter klemmen.

25. Verfahren nach einem der vorstehenden Ansprüche, **dadurch gekennzeichnet, daß** nach dem Einsetzen des Filters in das Gasgeneratorgehäuse das Außengehäuse und das Generatorgehäuse von außen oder über die axialen Öffnungen des Generatorgehäuses aneinander befestigt werden.

26. Verfahren nach einem der vorstehenden Ansprüche, **dadurch gekennzeichnet, daß** zwischen Außengehäuse und Generatorgehäuse eine Preßpassung vorgesehen ist, die eine Fixierung des Außengehäuses nach dem Einschieben vor dem Befestigen schafft.

## Claims

1. An inflator, in particular for a vehicle occupant restraint system, comprising a tubular inflator housing (3) which is closed off at its end faces and has radial exit ports (39) via which gas is able to exit the inflator and which in its interior has at least one combustion chamber (7, 7') packed with propellant (5), at least one ignition unit (11) for igniting the propellant (5) in the combustion chamber (7, 7') as well as at least one filter (35), upstream of the exit ports (39), a filter insert (23; 45) being provided which has an outer housing, the outer housing having several housing parts which at least partially surround the filter (35) arranged in the filter insert, **characterized in that** the outer housing together with its housing parts is secured radially to the inflator housing without an axial stop being provided, and that the outer geometry of the outer housing as well as the inner geometry of the inflator housing permit, in the not yet secured condition of the outer housing, a total insertion of the outer housing or of its housing parts in axial direction into the inflator housing to differing insertion depths.

2. The inflator as set forth in claim 1, **characterized in that** the filter insert constitutes a preassembled unit.

3. The inflator as set forth in any of the preceding claims, **characterized in that** the interior of the filter insert (23; 45) has an expansion space (41) into which generated gas flows, and from which it flows further into the filter (35).

4. The inflator as set forth in any of the claims 1 to 3, **characterized in that** the filter insert (23) is packed with propellant (5).

5. The inflator as set forth in any of the preceding claims, **characterized in that** a further expansion space (37) is provided radially between the cross-sectionally ring-shaped filter (35) and the inflator housing (3).

6. The inflator according to claim 1, **characterized in that** the outer housing consists of two end walls (25, 27) which clamp the filter between them.

7. The inflator according to any of the claims 1 to 5, **characterized in that** the outer housing consists of two end walls (25, 27) and of a gas-permeable supporting ring (33) connecting these walls.

8. The inflator as set forth in claim 6 or 7, **characterized in that** the end walls (25, 27) are formed so as to be pot-shaped, at least one end wall limits the combustion chamber (7, 7') and is provided with at least one port (29) for gas which is generated in the combustion chamber (7, 7'), the pot-shaped end walls (25, 27) having annular envelope sections (31) facing each other.

9. The inflator as set forth in any of the claims 6 to 8, **characterized in that** at least one end wall (25, 27) has at least one port (29) for gas which is generated in the combustion chamber (7, 7'), and an intermediate filter extends from this end wall (25, 27) into the combustion chamber (7, 7') and divides the combustion chamber (7, 7') in two sections.

10. The inflator as set forth in claim 8 or 9, **characterized in that** the port (29) is closed off from moisture entry into the combustion chamber (7, 7') by a burst disk (55).

11. The inflator as set forth in any of the preceding claims, **characterized in that** the filter insert (23; 45) is provided at one axial end of the inflator housing (3) and in that the end wall (27) thereof facing outwards is closed and seals off the interior of the inflator housing (3) towards the outside at this end.

12. The inflator as set forth in claim 11, **characterized in that** the filter insert (45) provided at one axial end comprises the ignition unit (11) extending axially through the insert as far as into the combustion chamber (7, 7').

13. The inflator as set forth in claim 12, **characterized in that** the inflator comprises a first filter insert (45) with an ignition unit (11) at one axial end and a second filter insert (23) with no ignition unit (11) at the other end.

14. The inflator as set forth in claim 13, **characterized in that** the filter inserts (23; 45) define a combustion chamber (7, 7') between them.

15. The inflator as set forth in any of the claims 1 to 12, **characterized in that** the inflator is configured multi-stage.

16. The inflator as set forth in claim 15, **characterized in that** several combustion chambers (7, 7') are separated from each other by at least one insert (23) without an ignition unit (11).

17. The inflator as set forth in claim 16, **characterized in that** two combustion chambers (7, 7') have a common filter insert (23) provided between them, into which insert gas generated in the combustion chambers (7, 7') is insufflated.

18. The inflator as set forth in claim 16, **characterized in that** two adjoining inserts (23) are provided between two combustion chambers (7, 7'), of which at least one insert (23) comprises a closed end wall (27) adjoining the other insert (23).

19. The inflator as set forth in claim 15, **characterized in that** a partition wall (61) is arranged between the combustion chambers (7, 7'), which is formed so as to be pot-shaped.

20. The gas generator as set forth in claim 19, **characterized in that** the partition wall (61) is a separate part which is secured to the inflator housing (3) and can be shifted in axial direction prior to being secured.

21. The inflator as set forth in any of the preceding claims, **characterized in that** a catalytically acting material (43) is provided in the filter insert (23; 45), for reducing the noxious emissions which are a constituent of the gases generated on deflagration of the propellant (5).

22. A method for producing an inflator according to any of the preceding claims, the method comprising the following steps:
starting from an axial opening of the inflator housing, the outer housing of the filter or the housing parts thereof are completely pushed in to the desired depth, the outer geometry of the outer housing and the inner geometry of the inflator housing being adapted to each other such that an even deeper pushing-in would be possible,
the outer housing together with the housing parts thereof is secured radially to the inflator housing without an axial stop being provided,
a propellant is filled into the combustion chamber and
a cover on the end face is applied to the inflator housing, which cover closes off the combustion chamber.

23. The method as set forth in claim 22, **characterized in that** the whole preassembled filter insert is pushed into the inflator housing.

24. The method as set forth in claim 22, **characterized in that** the outer housing of the filter comprises two end walls (25, 27) and a filter (33), the end walls (25, 27) being pushed in from opposite axial openings of the inflator housing and clamping the filter between them.

25. The method as set forth in any of the preceding claims, **characterized in that** after insertion of the filter in the inflator housing, the outer housing and the inflator housing are secured to each other from outside or via the axial openings of the inflator housing.

26. The method as set forth in any of the preceding claims, **characterized in that** a press fit is provided between the outer housing and the inflator housing, which provides a fixing of the outer housing after insertion and prior to securing.

## Revendications

1. Générateur de gaz, en particulier pour un système de retenue de passagers de véhicules, comportant un boîtier de générateur (3) de forme tubulaire qui est fermé sur ses faces frontales, qui possède des orifices de sortie (39) radiaux par l'intermédiaire desquels le gaz peut quitter le générateur de gaz, et qui présente dans son intérieur au moins une chambre de combustion (7, 7') remplie de carburant (5), au moins une unité d'amorçage (11) pour amorcer le carburant (5) dans la chambre de combustion (7, 7'), ainsi qu'au moins un filtre (35) en amont des orifices de sortie (39), un insert de filtre (23; 45) étant prévu avec un boîtier extérieur, et le boîtier extérieur possédant plusieurs parties de boîtier qui entourent au moins en partie le filtre (35) agencé dans l'insert de filtre, **caractérisé en ce que** le boîtier extérieur avec ses parties de boîtier est prévu radialement sur le boîtier de générateur sans prévoir de butée axiale et en ce que la géométrie extérieure du boîtier extérieur et la géométrie intérieure du boîtier de générateur permettent, lorsque le boîtier extérieur n'est pas encore fixé, un insertion totale à des profondeurs différentes du boîtier extérieur ou de ses parties de boîtier en direction axiale dans le boîtier de générateur.

2. Générateur de gaz selon la revendication 1, **caractérisé en ce que** l'insert de filtre forme une unité montée au préalable.

3. Générateur de gaz selon l'une quelconque des revendications précédentes, **caractérisé en ce que** l'intérieur de l'insert de filtre (23 ; 45) possède une chambre d'expansion (41) dans laquelle s'écoule le gaz produit pour s'écouler ensuite depuis celle-ci dans le filtre (35).

4. Générateur de gaz selon l'une quelconque des revendications 1 à 3, **caractérisé en ce que** l'insert de filtre (23) est rempli de carburant (5).

5. Générateur de gaz selon l'une quelconque des revendications précédentes, **caractérisé en ce qu'**une autre chambre d'expansion (37) est prévue radialement entre le filtre (35) de section transversale en forme d'anneau circulaire et le boîtier de générateur (3).

6. Générateur de gaz selon la revendication 1, **caractérisé en ce que** le boîtier extérieur est constitué par deux parois frontales (25, 27) qui enserrent entre elles le filtre.

7. Générateur de gaz selon l'une quelconque des revendications 1 à 5, **caractérisé en ce que** le boîtier extérieur est constitué par deux parois frontales (25, 27) et une bague d'appui (33) perméable au gaz, qui les relient.

8. Générateur de gaz selon la revendication 6 ou 7, **caractérisé en ce que** les parois frontales (25, 27) sont réalisées en forme de pot, au moins une face frontale délimite la chambre de combustion (7, 7') et est pourvue d'un orifice de passage (29) pour du gaz engendré dans la chambre de combustion (7, 7'), les parois frontales (25, 27) en forme de pot possédant des tronçons d'enveloppe (31) annulaires tournés l'un vers l'autre.

9. Générateur de gaz selon l'une quelconque des revendications 6 à 8, **caractérisé en ce qu'**au moins une paroi frontale (25, 27) possède au moins un orifice de passage (29) pour du gaz engendré dans la chambre de combustion (7, 7') et en ce que depuis cette face frontale (25, 27) un filtre intermédiaire s'étend dans la chambre de combustion (7, 7') qui divise la chambre de combustion (7, 7') en deux tronçons.

10. Générateur de gaz selon la revendication 8 ou 9, **caractérisé en ce que** l'orifice de passage (29) est fermé par une plaque de rupture (55) contre la pénétration de l'humidité dans la chambre de combustion (7, 7').

11. Générateur de gaz selon l'une quelconque des revendications précédentes, **caractérisé en ce que** l'insert de filtre (23 ; 45) est prévu à une extrémité axiale du boîtier de générateur (3) et en ce que sa face frontale (27) orientée vers l'extérieur est fermée et l'intérieur du boîtier de générateur (3) est étanché à cette extrémité vis-à-vis de l'extérieur.

12. Générateur de gaz selon la revendication 11, **caractérisé en ce que** l'insert de filtre (45) prévu à une extrémité axiale présente l'unité d'amorçage (11) qui s'étend à travers celui-ci jusque dans la chambre de combustion (7, 7').

13. Générateur de gaz selon la revendication 12, **caractérisé en ce que** le générateur de gaz présente à une extrémité axiale un premier insert de filtre (45) avec unité d'amorçage (11) et à l'autre extrémité un second insert de filtre (23) sans unité d'amorçage (11).

14. Générateur de gaz selon la revendication 13, **caractérisé en ce que** les inserts de filtre (23 ; 45) délimitent entre eux une chambre de combustion (7, 7').

15. Générateur de gaz selon l'une quelconque des revendications 1 à 12, **caractérisé en ce que** le générateur de gaz est réalisé à plusieurs étages.

16. Générateur de gaz selon la revendication 15, **caractérisé en ce que** plusieurs chambres de combustion (7, 7') sont séparées les unes des autres par au moins un insert (23) sans unité d'amorçage (11).

17. Générateur de gaz selon la revendication 16, **caractérisé en ce que** deux chambres de combustion (7, 7') possèdent un insert de filtre (23) commun prévu entre elles, dans lequel est insufflé du gaz engendré dans les chambres de combustion (7, 7')

18. Générateur de gaz selon la revendication 16, **caractérisé en ce que** deux inserts (23) adjacents l'un à l'autre sont prévus entre deux chambres de combustion (7, 7') dont au moins un insert (23) présente une paroi frontale (27) fermée adjacente à l'autre insert (23).

19. Générateur de gaz selon la revendication 15, **caractérisé en ce qu'**entre les chambres de combustion (7, 7') est agencée une paroi de séparation (61) réalisée en forme de pot.

20. Générateur de gaz selon la revendication 19, **caractérisé en ce que** la paroi de séparation (61) est une pièce séparée, fixée au boîtier de générateur (3) et déplaçable en direction axiale de sa fixation.

21. Générateur de gaz l'une quelconque des revendications précédentes, **caractérisé en ce que** dans l'insert de filtre (23 ; 45) se trouve un matériau (43) à réaction catalytique permettant de réduire les gaz nocifs qui sont une partie des gaz engendrés lors de la combustion du carburant (5).

22. Procédé de fabrication d'un générateur de gaz selon l'une des revendications précédentes, présentant les étapes suivantes :
Depuis une ouverture axiale du boîtier de générateur, on insere totalement le boîtier extérieur du filtre ou ses parties de boîtier à la profondeur souhaitée, la géométrie extérieure du boîtier extérieur et la géométrie intérieure du boîtier de générateur étant adaptées l'une à l'autre de telle sorte qu'une insertion encore plus profonde serait possible,
le boîtier extérieur avec ses parties de boîtier sont fixées radialement sur le boîtier de générateur sans prévoir de butée axiale,
du carburant est rempli dans la chambre de combustion, et
un couvercle côté paroi est monté sur le boîtier de générateur et ferme la chambre de combustion.

23. Procédé selon la revendication 22, **caractérisé en ce que** l'ensemble de l'insert de filtre monté au préalable est inséré dans le boîtier de générateur.

24. Procédé selon la revendication 22, **caractérisé en ce que** le boîtier extérieur du filtre présente deux parois frontales (25, 27) et un filtre (33), les parois frontales (25, 27) étant insérées depuis des ouvertures axiales opposées du boîtier de générateur et serrant entre elles le filtre.

25. Procédé selon l'une quelconque des revendications précédentes, **caractérisé en ce qu'**après avoir mis en place le filtre dans le boîtier de générateur, le boîtier extérieur et le boîtier de générateur sont fixés l'un à l'autre depuis l'extérieur ou par l'intermédiaire des ouvertures axiales du boîtier de générateur.

26. Procédé selon l'une quelconque des revendications précédentes, **caractérisé en ce qu'**entre le boîtier extérieur et le boîtier de générateur est prévu un ajustement par serrage qui crée une localisation du boîtier extérieur après l'insertion et avant la fixation.
